# EUROPÄISCHE PATENTSCHRIFT

(11) **EP 0 906 821 B1**
(45) Veröffentlichungstag und Bekanntmachung des Hinweises auf die Patenterteilung: **21.11.2001**
(21) Anmeldenummer: 98115392.7
(22) Anmeldetag: 17.08.1998
(51) Int. Cl.: B29C 47/66, B29C 47/08

(54) **Schneckenmaschine**
Screw extruder
Extrudeuse à vis

(30) Priorität: 17.09.1997 DE 19740836
(43) Veröffentlichungstag der Anmeldung: 07.04.1999
(73) Patentinhaber: Coperion Werner & Pfleiderer GmbH & Co. KG, 70469 Stuttgart (DE)
(72) Erfinder: Weller, Ulrich, 74379 Ingersheim (DE); Sauter, Rainer, 71686 Remseck (DE)
(74) Vertreter: Rau, Manfred, Dr. Dipl.-Ing.

(56) Entgegenhaltungen:
- EP-A- 0 334 163
- DE-A- 2 952 348
- DE-A- 3 936 085
- FR-A- 2 632 892
- PATENT ABSTRACTS OF JAPAN vol. 096, no. 002, 29. Februar 1996 & JP 07 266405 A (KOBE STEEL LTD), 17. Oktober 1995

## Beschreibung

Die Erfindung richtet sich auf eine Schneckenmaschine gemäß dem Oberbegriff von Anspruch 1.

Eine gattungsgemäße Schneckenmaschine ist aus DE 39 36 085 A1 bekannt. Bei derartigen Schneckenmaschinen tritt grundsätzlich das Problem auf, daß beim Aufheizen der Maschine und auch während des Betriebes Temperaturunterschiede zwischen den Gehäuse-Abschnitten und den Zugankern auftreten. Wenn, insbesondere bei größeren und schwereren Maschinen, eine gleichmäßige Temperaturverteilung nicht gewährleistet ist, kann es zu Dichtigkeitsproblemen kommen.

In DE 29 52 348 A1 wird eine Verbindung von Gehäuse-Abschnitten, insbesondere für Doppelschneckenextruder, beschrieben, wobei die Gehäuse-Abschnitte mittels vorgespannter, in zwei zu den Zylinderdoppelbohrungen achsparallelen und einander diametral gegenüberliegenden Ebenen angeordneter Gewindebolzen miteinander verbunden sind. Zur Erzielung der Vorspannung werden die Gewindebolzen erwärmt, so daß sich beim Abkühlen aufgrund der Längenverkürzung die gewünschte Vorspannung einstellt. Diese Maßnahmen sind nur bei kleineren Maschinen möglich, wenn die Zuganker in geschlossenen Bohrungen und relativ nahe zu den Zylinderdoppelbohrungen befinden, so daß die Temperaturdifferenzen sehr klein sind.

Aus FR 2 632 892 A1 ist es bekannt, bei einer Doppel-Schneckenmaschine die an der Durchdringung der beiden Zylinderbohrungen gebildeten Zwikkel durch Einsätze zu bilden, die wiederum Verschleißeinsätze abstützen und verspannen, die nach Art von Teil-Zylinder-Ringen ausgebildet und in der jeweiligen Zylinderbohrung angeordnet sind. Die Zwickel-Einsätze werden mittels Schrauben im jeweiligen Gehäuse-Abschnitt gehalten, die in den Gehäuse-Abschnitt durchsetzenden Bohrungen angeordnet sind. Sie sind mittels Tellerfedern gegen ein Lösen gesichert. Zwischen den Zwikkeleinsätzen und den Verschleißeinsätzen sind Einlagen aus weichem Metall vorgesehen, um einen verkantungsfreien Sitz zu erreichen.

Der Erfindung liegt die Aufgabe zugrunde, bei Schneckenmaschinen der gattungsgemäßen Art, und zwar insbesondere bei größeren Maschinen, unter Wahrung der grundsätzlichen Vorteile einer Zugankerkonstruktion eine hohe Dichtigkeit bei allen Betriebstemperaturen, also auch während des Aufheizvorganges und in aufgeheiztem Zustand, zu erreichen.

Diese Aufgabe wird erfindungsgemäß gelöst durch die Merkmale im Kennzeichnungsteil des Anspruches 1, wobei sich die Ausgestaltung der Federanordnung als Tellerfedernpaket gemäß Anspruch 2 als besonders vorteilhaft erweist.

Das Vorsehen einer erfindungsgemäßen Federnanordnung gleicht auftretende ungleichmäßige Ausdehnungen aufgrund einer uneinheitlichen Temperaturverteilung in optimaler Weise aus und stellt eine hohe Dichtigkeit sicher. Die nach Anspruch 2 vorgesehenen Tellerfedempakete ermöglichen es, eine sehr günstige Weg-Kraft-Kennlinie der Federanordnung zu realisieren, insbesondere die Federanordnung so auszulegen, daß einerseits bei Ausnutzung von ca. 50 % des maximalen Federweges genügend Dichtkraft aufgebracht wird und andererseits ca. 25 % des restlichen Federweges ausreichen, um die Längenunterschiede aufgrund der unterschiedlichen Wärmeausdehnung aufzunehmen. Die verbleibenden 25 % des maximal möglichen Federweges können dabei als Reserve verbleiben. Anspruch 3 gibt ein optimales Verhältnis der Dehnung von Zuganker und Tellerfedernpaket wieder.

Es wird erreicht, daß auch bei außen angeordneten Zugankern mit unterschiedlicher Temperaturverteilung eine Überlastung der Zuganker vermieden wird, d.h. daß insbesondere die Streckgrenze des Zugankers nicht überschritten wird. Gleichwohl kann eine so hohe Vorspannung aufgebracht werden, daß die erforderliche Dichtigkeit erzielt wird. Durch die Tellerfedernpakete wird auch der Vorteil erzielt, daß Ungenauigkeiten beim Anziehen der Verschraubung der Zuganker ausgeglichen werden. Die Ausgestaltung nach Anspruch 4 ermöglicht insbesondere eine einfache Montage. Zum Ausgleich von Toleranzen kann nach Anspruch 5 im Bereich des innenliegenden Endes des Tellerfedernpakets eine Abgleichscheibe vorgesehen sein. Gemäß Anspruch 6 kann durch die unteren Zuganker für die Montage eine Art Werkbank geschaffen werden, auf die die Gehäuse-Abschnitte aufgelegt werden können.

Der gemäß Anspruch 8 und 9 vorgesehene Kontrollstift ermöglicht eine optische Kontrolle der Vorspannung derart, daß die richtige Vorspannung dann erreicht ist, wenn die Kante einer auf das Tellerfedernpaket aufgesetzten Druckscheibe die Spitze des Kontrollstifts erreicht.

Nachfolgend wird die Erfindung anhand eines bevorzugten Ausführungsbeispiels in Verbindung mit der Zeichnung näher erläutert. Dabei zeigen:
- Fig. 1: eine Seitenansicht, teilweise geschnitten, eines Teils einer erfindungsgemäßen Schneckenmaschine,
- Fig. 2: einen Querschnitt durch die Schneckenmaschine und
- Fig. 3: eine Seitenansicht einer Schneckenmaschine in schematischer Darstellung.

Eine in der Zeichnung dargestellte Schneckenmaschine 1 umfaßt ein Schnecken-Gehäuse 2, wovon Gehäuse-Abschnitte 3 und 4, eine Endplatte 5 und ein Stirnteil 6 dargestellt sind.

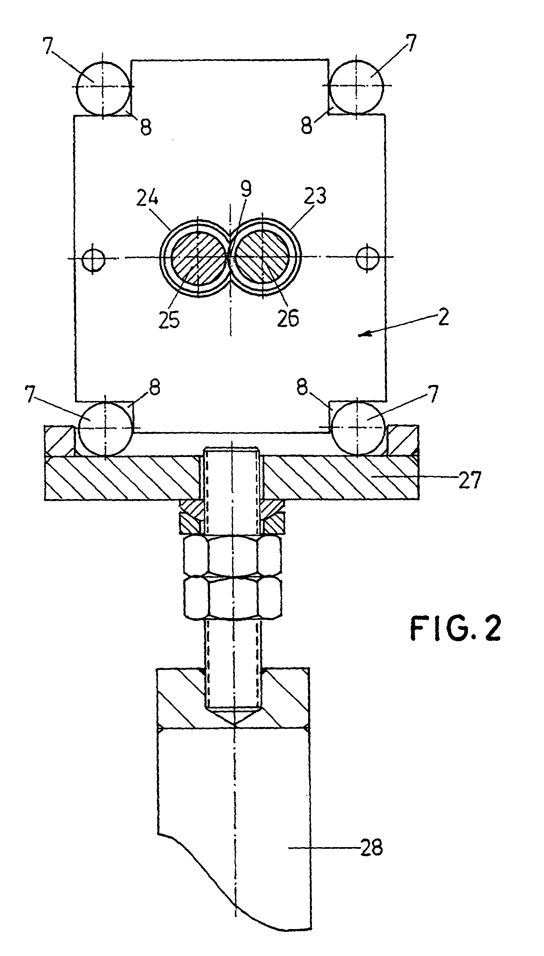

Die Gehäuse-Abschnitte 3, 4 sowie die Endplatte 5 und das Stirnteil 6 sind über Zuganker 7 verbunden, die außenliegend in Aussparungen 8 des Gehäuses 2 parallel zu dessen Mittel-Längs-Achse 9 angeordnet sind. Wie Fig. 2 entnehmbar ist, sind die Aussparungen 8 des Gehäuses 2 seitlich offen, so daß die Zuganker 7 quer zu ihrer eigenen Längsrichtung, d.h. quer zur Achse 9 in die Aussparungen 8 eingelegt werden können.

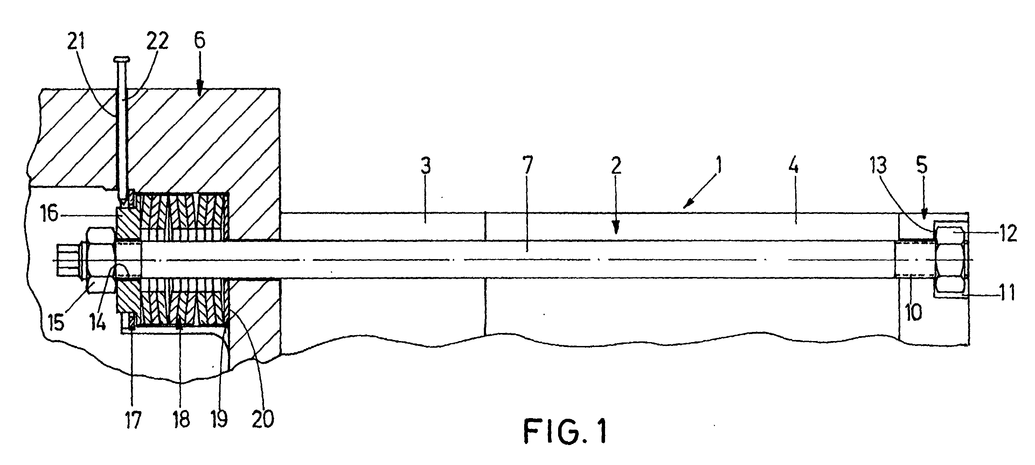

Die Zuganker 7 weisen an einem ersten Ende ein erstes in Fig. 1 rechts dargestelltes Gewinde 10 auf, das in eine ebenfalls seitlich offene Ausnehmung 11 der Endplatte 5 mündet, wobei in diesem Bereich eine Mutter 12 aufgeschraubt ist, die sich am Boden 13 der Ausnehmung 11 abstützt.

Am anderen, gegenüberliegenden zweiten Ende des Zugankers 7 ist ebenfalls ein Gewinde 14 vorgesehen, auf das eine Mutter 15 aufgeschraubt ist. Die Mutter 15 stützt sich gegen eine Druckscheibe 16 ab, die an einem Sprengring 17 anliegt. An die Druckscheibe 16 schließt sich ein Tellerfedernpaket 18 an, wobei eine Abgleichscheibe 19 zwischen diesem Tellerfedempaket 18 und einer inneren Stirnwand 20 des Stirnteils 6 vorgesehen ist. Die Mutter 15 mit Druckscheibe 16 bildet ein erstes Widerlager am Zuganker 7 und die Abgleichscheibe 19 mit der Stirnwand 20 ein zweites Widerlager am Gehäuse 2 jeweils für das Tellerfedernpaket 18. Der Sprengring 17 verhindert das Herausfallen der Druckscheibe 16 und des Tellerfedernpakets 18, wenn der Zuganker 7 ausgebaut wird.

Das Stirnteil 6 wird von einer Bohrung 21 in Richtung senkrecht zur Längsachse 9 des Gehäuses 2 durchsetzt, in welche ein Kontrollstift 22 eingesetzt ist, der bis in den Bereich der Druckscheibe 16 ragt und eine Kontrolle der ordnungsgemäßen Montage ermöglicht.

Aus Fig. 2 ist erkennbar, daß das Gehäuse 2 zwei einander durchdringende, im Querschnitt kreisrunde Längsausnehmungen 23, 24 aufweist, in welchen Schnecken 25, 26 angeordnet sind.

Weiterhin ist aus Fig. 2 erkennbar, daß die beiden unteren Zuganker 7 auf einem Tisch 27 einer Aufnahme 28 ruhen, wodurch die Montage vereinfacht wird.

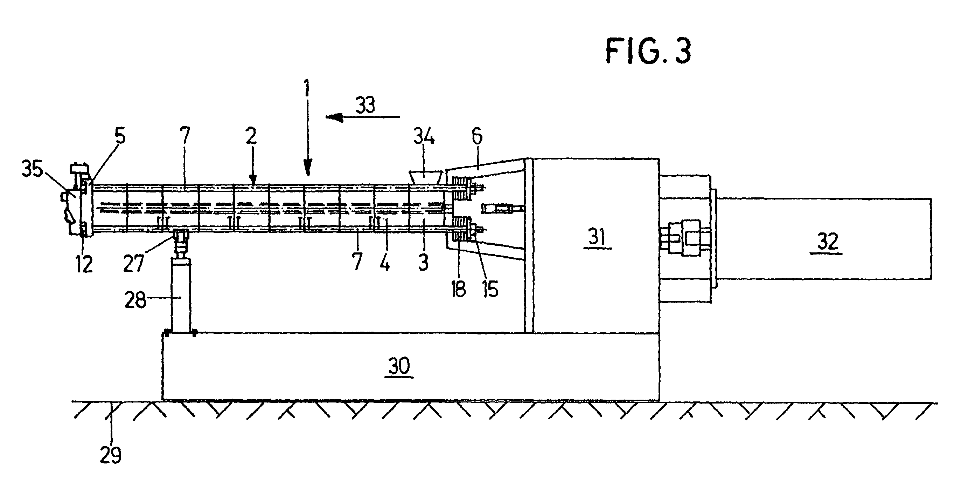

Bei der in Fig. 3 insgesamt dargestellten Schneckenmaschine 1 handelt es sich um einen Extruder. Er weist ein auf einem Fundament 29 abgestütztes Untergestell 30 auf, auf dem ein Untersetzungs- und Verteiler-Getriebe 31 abgestützt ist. Auf der Eingangsseite des Getriebes 31 ist ein Antriebsmotor 32 mit einer Schaltkupplung angeflanscht; auf der Abtriebsseite des Getriebes 31 ist das Stirnteil 6, eine sogenannte Laterne, angebracht, an der das den Verfahrensteil bildende Gehäuse 2 angebracht ist Dieses Gehäuse 2 besteht aus den Gehäuse-Abschnitten 3 und 4 und weiteren Gehäuse-Abschnitten. Die Arbeitsrichtung 33 entspricht der Längsrichtung des Gehäuses 2. Auf dem in Arbeitsrichtung 33 ersten Gehäuse-Abschnitt 3 ist ein Einlaß 34 für zu behandelndes Material vorgesehen. Der in Arbeitsrichtung 33 letzte Gehäuse-Abschnitt ist mit einem Düsenkopf 35 versehen, durch den behandeltes Material austritt. Der Düsenkopf 35 liegt an der Endplatte 5 an. Der das Gehäuse 2 bildende Verfahrensteil ist mittels der als Stütze ausgebildeten Aufnahme 28 auf dem Untergestell 30 abgestützt. Die unteren Zuganker 7 liegen auf dem als Querbalken oder Träger ausgebildeten Tisch 27 auf.

Das Verhältnis der in mm/N definierten Dehnung von Zuganker 7 zu Tellerfedernpaket 18 liegt im Bereich von 1:1,5 bis 1:5. Mit anderen Worten ist die Dehnung des Tellerfedernpakets 18 jeweils um das 1,5 bis 5-fache größer als die Dehnung der Zuganker 7, so daß Längenänderungen der Zuganker 7, insbesondere durch thermisch bedingte unterschiedliche Dehnungen von Gehäuse 2 und Zugankern 7, ohne große Änderung der Vorspannung der Zuganker 7 aufgefangen werden. Auch wenn die Dehnung des Tellerfedernpaketes 18 nicht nennenswert größer als die der Zuganker 7, tritt der vorgeschilderte Effekt ein, da das Tellerfedernpaket 18 und der Zuganker 7 wie in Reihe geschaltete Federn zu betrachten sind. Die Dehnungen addieren sich also.

Das Anziehen der Zuganker 7 und damit das Vorspannen der Zuganker 7 und des Tellerfedernpakets 18 und damit das Zusammenspannen des Gehäuses 2 erfolgt mit einem vorgegebenen Drehmoment, mit dem die eine oder andere Mutter 12 bzw. 15 beaufschlagt wird. Dieses Verfahren wird insbesondere angewandt, wenn das Gehäuse 2 in kaltem Zustand der Gehäuse-Abschnitte und der Zuganker 7 zusammengebaut wird. Wenn dagegen, was in der Praxis vorkommt, das Gehäuse 2 in betriebswarmem Zustand der Gehäuse-Abschnitte aber in deutlich kälterem Zustand der Zuganker 7 zusammengebaut wird, dann ist es zweckmäßig, zusätzlich einen optischen Abgleich über den Kontrollstift 22 vorzunehmen, wobei naturgemäß auch jede andere Markierung am Stirnteil 6 vorgesehen sein kann. Entscheidend ist nur, daß die am Stirnteil 6 angebrachte Markierung mit einer Markierung am Zuganker 7 oder dem Tellerfedernpaket 18 in Überdeckung gebracht wird, um die Vorspannung des Tellerfedernpakets 18 oder der Druckscheibe 16 optisch erkennbar zu machen.

## Patentansprüche

1. Schneckenmaschine mit einem in Längsrichtung aneinandergesetzte Gehäuse-Abschnitte (3, 4) aufweisenden, zusammengesetzten Gehäuse (2), wobei die Gehäuse-Abschnitte (3, 4) durch eine Mehrzahl von Zugankern (7), welche an der Gehäuseaußenseite parallel zueinander in Längsrichtung des Gehäuses (2) verlaufen und in nach außen offenen Aussparungen (8) des Gehäuses (2) angeordnet sind, dicht gegeneinander verspannt sind, **dadurch gekennzeichnet, daß** die Zuganker (7) in Längsrichtung jeweils durch eine vorgespannte Federanordnung belastet sind.

2. Schneckenmaschine nach Anspruch 1, **dadurch gekennzeichnet, daß** die Federanordnung durch ein auf den jeweiligen Zuganker (7) aufgesetztes Tellerfedempaket (18) gebildet ist.

3. Schneckenmaschine nach Anspruch 2, **dadurch gekennzeichnet, daß** das Verhältnis der Dehnung des Zugankers (7) zur Dehnung des Tellerfedernpaketes (18) im Bereich von 1:1,5 bis 1:5 liegt.

4. Schneckenmaschine nach Anspruch 2, **dadurch gekennzeichnet, daß** das Tellerfedernpaket (18) sich einerseits an einer dem Gehäuse (2) zugeordneten Stirnwand (20) und andererseits wenigstens mittelbar an einer auf ein Gewinde (14) am Ende jedes Zugankers (7) aufgeschraubten Mutter (15) abstützt.

5. Schneckenmaschine nach Anspruch 2, **dadurch gekennzeichnet, daß** das Tellerfedernpaket (18) über eine Abgleichscheibe (19) abgestützt ist.

6. Schneckenmaschine nach Anspruch 1, **dadurch gekennzeichnet, daß** untere Zuganker (7) auf einer Aufnahme (28) abgestützt sind.

7. Schneckenmaschine nach Anspruch 2, **dadurch gekennzeichnet, daß** eine optische Kontrolleinrichtung zur Überprüfung der Vorspannung eines Tellerfedernpaketes (18) vorgesehen ist.

8. Schneckenmaschine nach Anspruch 7, **dadurch gekennzeichnet, daß** ein Kontrollstift (22) zur Überprüfung der Vorspannung eines Tellerfedernpaketes (18) vorgesehen ist, der sich mit einem Ende bis in den Bereich des freien äußeren Endes des Tellerfedernpakets (18) erstreckt.

9. Schneckenmaschine nach Anspruch 8, **dadurch gekennzeichnet, daß** der Kontrollstift (22) eine Bohrung (21) des Gehäuses (2) durchsetzt, die im wesentlichen senkrecht zur Längsrichtung des Gehäuses (2) verläuft.

## Claims

1. A screw-type extrusion machine comprising a composite casing (2) which comprises casing sections (3, 4) fitted together in a longitudinal direction, the casing sections (3, 4) being tightly tautened relative to each other by a plurality of tie rods (7) which extend parallel to each other in the longitudinal direction of the casing (2) on the outside thereof, **characterized in that** the tie rods (7) are loaded in the longitudinal direction by a pre-stressed spring system.

2. A screw-type extrusion machine according to claim 1, **characterized in that** the spring system is a saucer spring assembly (18) placed on the respective tie rod (7).

3. A screw-type extrusion machine according to claim 2, **characterized in that** the ratio which the elongation of the tie rod (7) bears to the elongation of the saucer spring assembly (18) ranges from 1:1.5 to 1:5.

4. A screw-type extrusion machine according to claim 2, **characterized in that** on the one hand the saucer spring assembly (18) supports itself on a front wall (20) allocated to the casing (2) and on the other hand at least indirectly on a nut (15) screwed on a thread (14) at the end of each tie rod (7).

5. A screw-type extrusion machine according to claim 2, **characterized in that** the saucer spring assembly (18) is supported by a compensation disk (19).

6. A screw-type extrusion machine according to claim 1, **characterized in that** the tie rods (7) are disposed in externally open recesses (8) of the casing (2), and **in that** lower tie rods (7) are supported on a receptacle (28).

7. A screw-type extrusion machine according to claim 2, **characterized in that** optical control means are provided for the verification of the pre-stress of a pre-stressed saucer spring assembly (18).

8. A screw-type extrusion machine according to claim 7, **characterized in that** a control pin (22) is provided for the verification of the pre-stress of the saucer spring assembly (18), an extremity of the control pin (22) extending as far as into the vicinity of the free outer end of that saucer spring assembly (18).

9. A screw-type extrusion machine according to claim 8, **characterized in that** the control pin (22) passes through a drill hole (21) of the casing (2), the drill hole (21) being substantially perpendicular to the longitudinal direction of the casing (2).

## Revendications

1. Extrudeuse à vis comportant un boîtier (2) composite présentant des tronçons (3, 4) de boîtier juxtaposés les uns aux autres en direction longitudinale, les tronçons (3, 4) de boîtier étant serrés fermement les uns contre les autres par une multitude de tirants d'ancrage (7) qui s'étendent sur la face extérieure du boîtier en parallèle les uns aux autres en direction longitudinale du boîtier (2) et qui sont agencés dans des évidements (8) du boîtier (2) ouverts vers l'extérieur, **caractérisée en ce que** les tirants d'ancrage (7) sont sollicités chacun en direction longitudinale par un agencement à ressort précontraint.

2. Extrudeuse à vis selon la revendication 1, **caractérisée en ce que** l'agencement à ressort est formé par un empilement de rondelles Belleville (18) posé sur le tirant d'ancrage (7) respectif.

3. Extrudeuse à vis selon la revendication 2, **caractérisée en ce que** le rapport entre l'extension du tirant d'ancrage (7) et l'extension de l'empilement de rondelles Belleville (18) est dans la plage de 1:1,5 à 1:5.

4. Extrudeuse à vis selon la revendication 2, **caractérisée en ce que** l'empilement de rondelles Belleville (18) prend appui d'une part sur une paroi frontale (20) associée au boîtier (2) et d'autre part au moins indirectement sur un écrou vissé sur un filetage (14) à l'extrémité de chaque tirant d'ancrage (7).

5. Extrudeuse à vis selon la revendication 2, **caractérisée en ce que** l'empilement de rondelles Belleville (18) est soutenu par un disque d'égalisation (19).

6. Extrudeuse à vis selon la revendication 1, **caractérisée en ce que** des tirants d'ancrage (7) inférieurs sont en appui sur un logement (28).

7. Extrudeuse à vis selon la revendication 2, **caractérisée en ce qu'**il est prévu un dispositif de contrôle visuel pour vérifier la précontrainte d'un empilement de rondelles Belleville (18).

8. Extrudeuse à vis selon la revendication 7, **caractérisée en ce qu'**il est prévu une goupille de contrôle (22) pour vérifier la précontrainte d'un empilement de rondelles Belleville (18), laquelle s'étend avec une extrémité jusque dans la région de l'extrémité extérieure libre de l'empilement de rondelles de Belleville (18).

9. Extrudeuse à vis selon la revendication 8, **caractérisée en ce que** la goupille de contrôle (22) traverse un perçage (21) du boîtier (2) qui s'étend sensiblement perpendiculairement à la direction longitudinale du boîtier (2).
